# EUROPEAN PATENT APPLICATION

(11) **EP 3 760 040 A1**
(43) Date of publication of application: **06.01.2021**
(21) Application number: 20184159.0
(22) Date of filing: 06.07.2020
(51) Int. Cl.: A01K 41/00

(54) **METHOD AND DEVICE FOR PLACING PRE-HATCHED EGGS IN A STABLE**

(30) Priority: 05.07.2019 NL 2023443
(71) Applicant: Van de Ven Beheer B.V., 5521 DZ Eersel (NL)
(72) Inventor: Kuijken, Ronald, 5571 KP Bergeijk (NL)
(74) Representative: Verhees, Godefridus Josephus Maria

(57) **Abstract**

A device 1 for placing pre-hatched eggs 23 in a stable 13 on litter 13 already present on a stable floor 11 has a belt 7 on which the eggs 23 can be placed, as well as means 17 for pulling the belt 7 over the litter 13 into the stable, and further means 5, 15 for pulling the belt out of the stable after hatching of the chicks. As a result, after the hatching, no stayers (these are eggs that have not hatched) and no empty shells remain on the litter 13 in the stable.

## Description

### Technical field of the invention

The invention relates to a method for placing pre-hatched eggs in a stable, wherein the eggs are placed on litter already present on a stable floor.

### Background of the invention

Such a method is known from WO2019/007741A. In this known method, eggs are taken from a hatching tray, in which they are pre-hatched, and placed on litter, that is directly on the stable floor in a stable, using a transfer mechanism. A drawback of this known method is that the eggs that do not hatch during incubation have to be removed manually. A further drawback is that the empty shells of the hatched eggs remain on the litter.

### Summary of the invention

An object of the invention is to provide a method of the type described in the preamble, in which the above-described drawbacks do not occur. To this end, the method according to the invention is characterized in that the eggs are placed on a conveyor belt or transport plate and this belt or plate is then pulled over the litter already present on the stable floor. As a result, no stayers (these are eggs that have not hatched) and no empty shells are left behind on the litter in the stable. All operations (placing the eggs on the belt and removing the remains and empty shells) can be performed on one side of the stable. The eggs can be placed on the belt automatically or manually.

To ensure that the eggs do not roll over or off the belt or the plate, a layer of litter is preferably applied to the belt or plate before the eggs are placed on the belt, after which the eggs are placed on the litter.

In another favorable measure to prevent the eggs from rolling over or off the belt or the plate, before placing the eggs on the belt, a sheet of paper is placed on the belt or on the plate, after which the eggs are placed on the belt.

To prevent the eggs from rolling off the belt or plate, a ridge/track of food is placed along each edge of the belt or plate.

The invention also relates to a device for placing pre-hatched eggs in a stable on litter already present on a stable floor. With regard to this device, the invention is characterized in that the device comprises a belt or comprises a plate on which the eggs can be placed, as well as means for pulling the belt or the plate over the litter in the stable and further means for pulling the belt or plate out of the stable after the hatching.

Preferably, ventilation holes are provided in the belt or in the plate for the passage of rising hot air under the belt or the plate. This creates an air flow which allows the eggs to be kept at a better temperature.

An embodiment of the device according to the invention, in which the eggs cannot roll over the belt or the plate, is characterized in that a pattern of receiving holes is present in the belt or in the plate, which receiving holes have a shape and size such that an egg cannot go through it, but an egg sinks into it to such extend that it cannot roll away.

### Brief description of the drawings

The invention will be explained in more detail below with reference to an illustrative embodiment of the device according to the invention shown in the drawings. Hereby:
Figure 1 shows a side view of a first embodiment of the device according to the invention present in a stable;
Figure 2 shows the device shown in figure 1 in perspective;
Figure 3 shows a perspective view of a second embodiment of the device according to the invention; and
Figure 4 shows a detail of the device shown in figure 3.

### Detailed description of the drawings

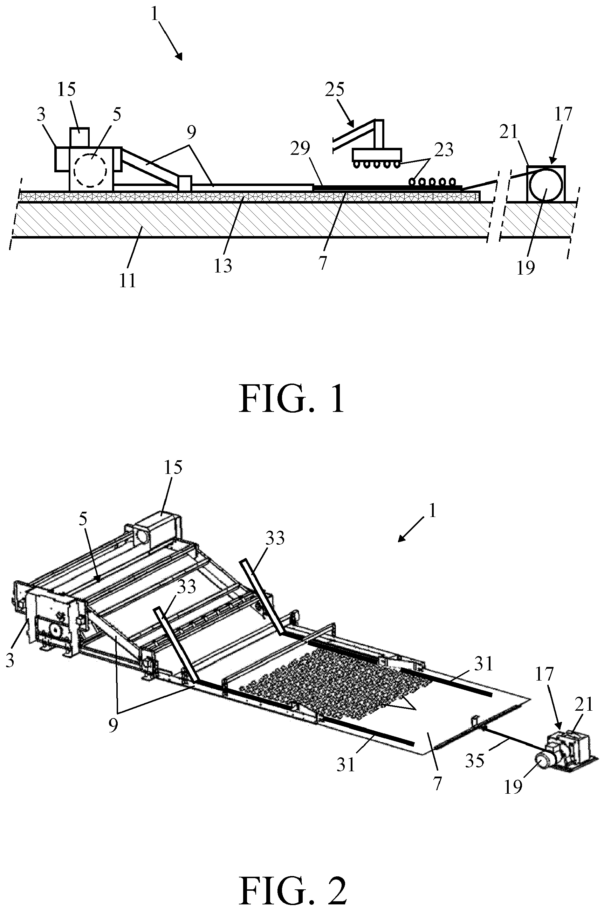

In figures 1 and 2, a first embodiment of the device according to the invention present in a stable is shown in side view and in perspective, respectively. The device 1 has frame 3 with a reel 5 mounted on it, on which reel a belt 7 is wound and which reel is provided with a guide 9 for guiding the belt between the reel and the stable floor 11. The device furthermore has means for pulling the belt over litter 13 already present in the stable floor, see figure 1. The device is provided with a drive 15 for the reel 5 for rewinding the unwound belt 7 after use. The means for pulling the belt into the stable are formed by a pulling unit 17 with a driven cable reel 19 which is also provided with a drive 21. Both the frame 3 with the belt reel 5 and the pulling unit 27 are movable and can simply be placed in a stable and taken out again.

Pre-incubated eggs 23 can be placed on the belt 7 by a transfer machine 25 as described, for example, in WO2019/007741A. During the pulling of the belt 7 into the stable a thin layer of litter material 29 is applied to the belt on which the eggs are subsequently placed. For example, the litter may be applied by pulling the belt or plate under a bale of litter and loosening litter from the underside of the litter bale by scratching which then falls onto the belt and forms a thin layer (not shown in the figures). Another possibility is to unroll a roll of paper while pulling the belt or plate into the stable and place the eggs on the paper.

A ridge of feed 31 is placed at the sides of the belt or the plate that is pulled into the stable, see figure 2. This can be done by positioning a tube 33 a little (adjustable in height) above the belt 7 and via this tube deposit feed on the belt during the pulling of the belt into the stable, whereby a track of feed 31 will then be on the belt. The height of the tube 33 relative to the belt 7 determines the width and height of the feed track 31. By doing this on both sides of the belt, a place is created where the newly hatched chicks can take up their first feed and it is also secured that eggs remain on the belt during pulling of the belt in the stable because there is an ridge of feed. Ventilation holes (not shown in the figures) may be provided in the belt for the passage of ascending warm air under the belt.

The belt is preferably pulled into the house under a generally known winchable drinking system (not shown in the figures), so that the newly hatched chicks also immediately have access to water. In this way a collection/drying place is created by the belt where the chicks in the phase just after hatching can quietly dry up and recover from the labor they have delivered.

The device according to the invention is used as follows. The belt reel 5 is placed at the front of the stable and a pulling unit 17 is placed at the rear of the stable. The belt 7 is coupled to the pulling unit via a cable or chain 35 and pulled by the pulling unit into the stable.

The transfer machine 25 takes the eggs 23 from a full setter tray, which is supplied on a trolley, and places them on the belt 7 with sufficient distance between them for a good heat management. The belt is then pulled into the stable over the relatively thick litter layer 11 which has been previously placed in the stable and the following eggs are placed on the belt. With the transfer machine 25 eggs are placed on the belt only at the front of the stable and the device 1 ensures the displacement of the eggs in the stable. The empty setter tray is placed in an empty trolley by the transfer machine. Placing the eggs 23 on the belt 7 is therefore fully automatic. The transfer machine 25 can be used in different stables.

After the hatching of the chicks, the belt 7 is rolled up and the empty shells and remaining ones that are left behind are transported back to the front of the stable. Here the residual material falls into a trough that is extracted by means of an extraction unit (not shown in the figures) that is placed outside the stable (one connects it with a hose through a closable hole in the wall). In this way, the dirty part and also the dust development with which this may be associated is kept outside the stable. When the belt is rolled up, it can be removed from the stable. The belt or plate can then be cleaned and, if necessary, reused in other houses.

Advantages of the device/method according to the invention:
- maximum automation,
- no stayers are left behind in the stable,
- the belt is carried by the litter and will assume the ambient temperature of the stable air,
- the establishment is independent of the stable construction, and
- the facility is reusable in other stables.

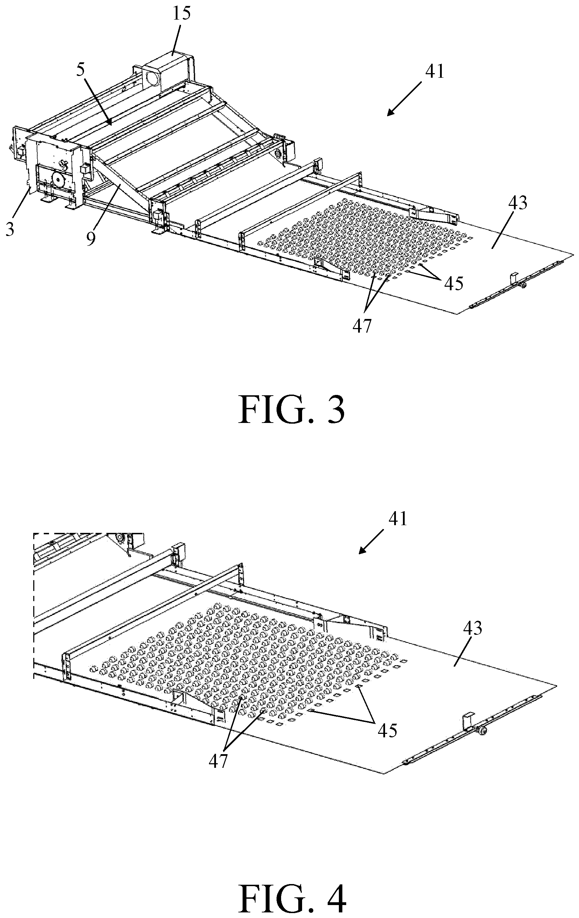

Figures 3 and 4 show a second embodiment of the device according to the invention present in a stable. All parts similar to those of the first embodiment described above are designated by the same reference numerals. In this device 41, a pattern of receiving holes 45 is present in the belt 43. These receiving holes are of such a shape and size that an egg 47 cannot pass through it but sinks so far that it can no longer roll away. The holes are positioned in such a way that good heat management of an egg is ensured during the hatching process.

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. Method for placing pre-hatched eggs in a stable, wherein the eggs (23) are placed on litter (13) already present on a stable floor (11), **characterized in that** the eggs (23) are placed on a conveyor belt (7; 43) or transport plate and this belt or plate is then pulled over the litter (13) already present on the stable floor (11).

2. Method according to claim 1, **characterized in that** before the eggs (23) are placed on the belt (7; 43) a layer of litter (29) is applied to the belt or on the plate, after which the eggs are placed on the litter.

3. Method according to claim 1, **characterized in that** before the eggs are placed on the belt, a sheet of paper is placed on the belt or on the plate, after which the eggs are placed on the sheet of paper.

4. Method according to claim 1, 2 or 3, **characterized in that** a ridge/track of food (31) is applied along each edge of the belt (7; 43) or plate.

5. Device (1; 41) for placing pre-hatched eggs (23) in a stable on litter (13) already present on a stable floor (11), **characterized in that** the device comprises a belt (7; 43) or comprises a plate on which the eggs (23) can be placed, as well as means (17) for pulling the belt (7; 43) or the plate over the litter (13) in the stable and further means (5, 15) for pulling the belt or plate out of the stable after the chicks hatch.

6. Device according to claim 5, **characterized in that** there are ventilation holes in the belt or in the plate for the passage of rising hot air under the belt or the plate.

7. Device (41) according to claim 6, **characterized in that** a pattern of receiving holes (45) is present in the belt (43) or in the plate, which receiving holes have a shape and size such that an egg (47) cannot go through it but an egg sinks into it to such extend that it cannot roll away.
